Europäisches Patentamt

European Patent Office

Office européen des brevets

(11) Numéro de publication: **0 251 940**
**A1**

## DEMANDE DE BREVET EUROPEEN

(21) Numéro de dépôt: 87420091.8

(22) Date de dépôt: 07.04.87

(51) Int. Cl.³: **F 16 B 12/26**

(30) Priorité: 11.04.86 FR 8605735

(43) Date de publication de la demande:
07.01.88 Bulletin 88/1

(84) Etats contractants désignés:
AT BE CH DE ES GB GR IT LI LU NL SE

(71) Demandeur: Joulia, Pierre
5, allée du Déjeuner sur l'Herbe La Pérollière
F-74000 Cran-Gevrier(FR)

(72) Inventeur: Joulia, Pierre
5, allée du Déjeuner sur l'Herbe La Pérollière
F-74000 Cran-Gevrier(FR)

(54) Dispositif d'assemblage d'elements de construction, notamment d'ameublement.

(57) Les éléments (1, 2) à assembler présentent au moins une face de panneau (9, 10). Le dispositif comporte deux branches (5, 6) perpendiculaires à chaque panneau (9, 10) présentant des surépaisseurs polyédriques à surfaces planes complémentaires en contre-dépouille formant crochets (7, 8). Celles-ci sont complétées par des surfaces planes (3, 4) perpendiculaires au panneau opposé et formant avec la surface des branches (5, 6) un angle déterminé. Les faces planes (3, 4) sont destinées à glisser l'une sur l'autre sous l'effet d'un effort d'assemblage (F) à l'encontre de la réaction élastique des branches (5, 6) jusqu'à enclenchement par retour élastique des crochets (7, 8).

Fig. 1

EP 0 251 940 A1

Croydon Printing Company Ltd.

La présente invention est relative aux éléments d'ameublement devant être assemblés entre eux à un certain angle et dont on souhaite que l'assemblage soit le plus simple et le plus rapide possible, tout en conservant les qualités techniques requises pour un assemblage classique, comme c'est le cas dans le domaine du meuble en pièces détachées à monter soi-même.

Le problème d'assemblage de panneaux à un certain angle n'est pas nouveau et de nombreux dispositifs on été proposés. Ils font généralement appel à des systèmes vis-écrous nécessitant l'utilisation d'outils, par exemple d'un tournevis dont la manipulation s'avère très souvent mal aisée du fait de problèmes d'accessibilité, venant s'ajouter à celui du maintien des différentes pièces à assembler, qui peut nécessiter l'aide d'un deuxième opérateur, l'un maintenant les panneaux à assembler, le second manipulant les pièces d'assemblage.

Ainsi sont connus des dispositifs de jonction pour assemblage de panneaux tels que ceux décrits dans les demandes ou brevets DE 30 28 684.1, IT 23 476 B/80, GB 46 048/78, ou encore FR 2 360 780, dont la multitude de pièces dans un espace restreint ne va pas dans le sens de la simplicité d'emploi, et semble demander une certaine adresse ou une certaine qualification.

Beaucoup plus proche de l'invention, dans la demande de brevet GB 11 344/75, a été décrit un dispositif comprenant un élément possédant des branches élastiquement déformables et ayant à leurs extrémités des crochets conformés pour venir en prise avec les parois opposées d'un passage présentant des épaulements prévus dans un second élément. Il est intéressant de noter que ce dispositif n'autorise pas une manipulation non préférentielle des deux éléments à assembler et fait appel à deux éléments non identiques, ce qui, pour une utilisation dans un ensemble complexe de panneaux, peut poser des problémes de rapidité et de facilité d'exécution et de compréhension.

La présente invention vise à s'affranchir d'une telle complexité et de telles limitations de manipulation en proposant un dispositif d'assemblage d'éléments d'ameublement, simplifié et pouvant être mis en oeuvre, soit comme partie intégrante des éléments à assembler, notamment dans le cas des meubles en matières plastiques ou en métal, soit comme sous-ensemble rapporté sur les éléments à assembler, comme pour les meubles en bois ou en particules agglomérées.

Les caractéristiques reprises dans les revendications, avantages et autres aspects de l'invention, apparaitront dans la description qui suit et pour l'intelligence de laquelle on se referera aux dessins, dont :

- la figure 1 représente en perspective et coupe un dispositif d'assemblage selon l'invention,

- et les figures 2A, 2B et 2C représentent des vues partielles, éventuellement en coupe, d'un mode préférentiel d'exécution de l'invention.

Bien que cette utilisation ne soit pas exclusive, l'invention va être exposée en faisant plus particulièrement référence à un élément d'ameublement en matière plastique, avantageusement utilisable dans le domaine de l'ameublement à assembler soi-même, notamment de l'agencement de magasin, et dans le domaine du présentoir ainsi que du jouet.

Des éléments 1 et 2 présentant des faces de panneaux 9, 10 destinés à être assemblés entre eux sont rendus solidaires respectivement de branches identiques 5 et 6. Ces branches 5 et 6 sont respectivement perpendiculaires aux faces de panneaux 9 et 10 et présentent des surépaisseurs polyédriques à surfaces planes en contre-dépouille 7, 8 appelées crochets dans ce qui suit. Ces crochets 7, 8 sont complétés par des surfaces planes 3 et 4 qui forment un angle particulier $\alpha$ par rapport aux faces des branches 5 et 6.

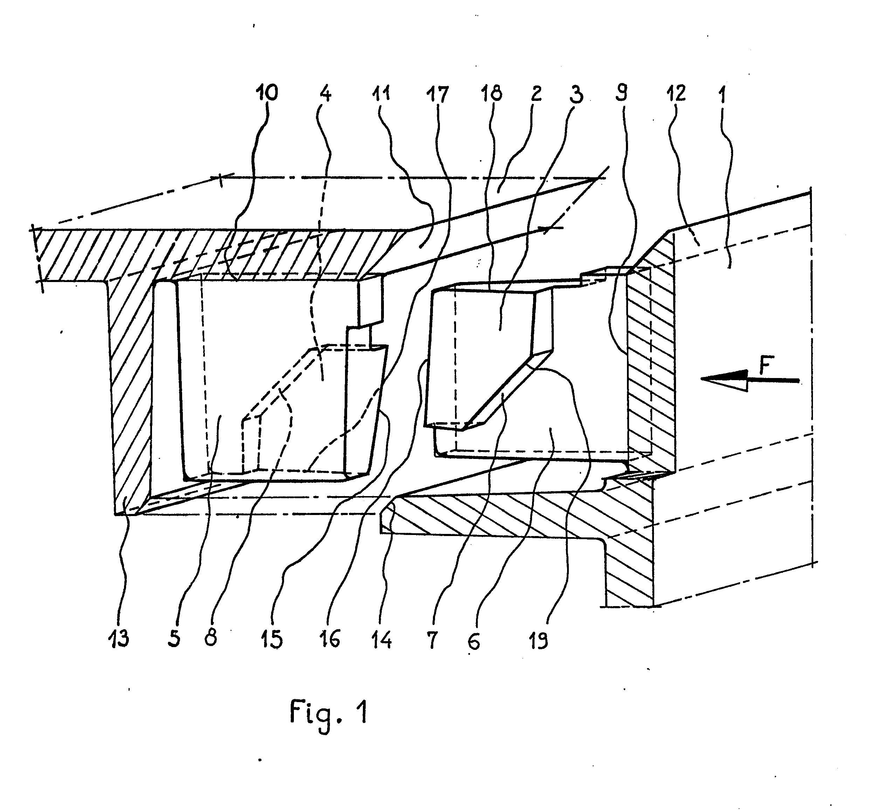

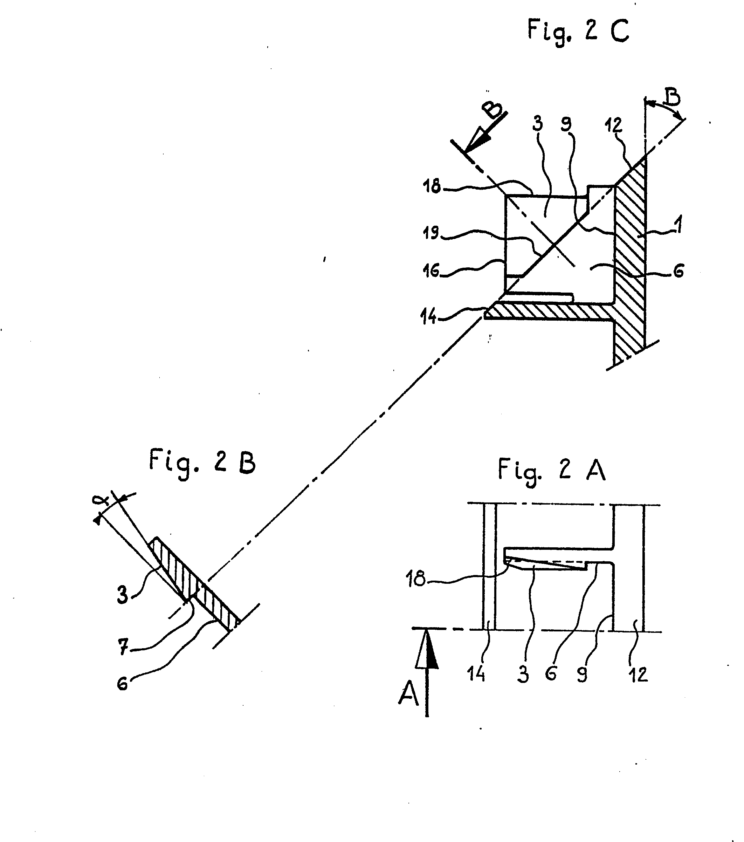

Cet angle $\alpha$ est représenté par la coupe de la figure 2 B. Cette coupe suivant B de la figure 2 C passe par un plan formant avec l'arête 19 du crochet 7, un angle droit. Ainsi représenté, l'angle $\alpha$ formé par la face 3 avec la face de la branche 6, permet d'obtenir des arêtes 16 et 18 formant chacune le même angle $\alpha$ par rapport à la face de la branche 6. Cette condition est nécessaire pour que, lors de l'assemblage des éléments 1 et 2 entre eux, comme représenté à la figure 1, les arêtes 15 et 16 puissent se trouver parallèles entre elles. Cette position permet aux faces planes 3 et 4 d'entrer en contact et, sous l'effort F nécessaire à cet assemblage, les faces 3 et 4, du fait de leurs positions angulaires respectives par rapport aux faces des branches 6 et 5, vont rester en contact l'une avec l'autre et décomposer la force F, en créant une force perpendiculaire à celle-ci, ce qui aura pour effet de déformer par élasticité du matériau, les branches 5 et 6 et ainsi, permettre aux crochets en contre-dépouille 7 et 8 de trouver le passage nécessaire au mouvement de l'assemblage. Les éléments 1 et 2 ayant pris leurs positions définitives d'assemblage, les crochets en contre-dépouille 7 et 8 se trouvent alors dégagés des faces 3 et 4 et viennent par réaction élastique des branches 5 et 6 s'enclencher l'une au contact de l'autre, immobilisant ainsi les éléments 1 et 2 qui viennent se fermer l'un sur l'autre, par les contacts entre des chanfreins 11 et 12 complémentaires que présentent les éléments 1 et 2 à l'extrémité des panneaux 9 et 10 et de chanfreins complémentaires 13, 14 que présentent sur des nervures les éléments 1 et 2 perpendiculairement à leurs panneaux 9 et 10. Dans cette situation d'assemblage, l'angle que forment les panneaux 9 et 10 entre eux est le double de celui formé par l'arête 19 par rapport à la face 9, représenté par la coupe suivant A de la figure 2/2. Il est entendu qu'un arrêt en translation des éléments 1 et 2, l'un par rapport à l'autre est nécessaire afin de conserver le contact des crochets 7 et 8 entre eux.

De la description du mode de réalisation de l'invention qui précède, on voit ce qui n'était jusqu'alors pas possible, que peuvent être manipulés et assemblés sans ordre préférentiel les éléments 1 ou 2, l'un avec l'autre. Ce dispositif permet un assemblage d'éléments d'ameublement à monter soi-même par exemple, en proposant un montage très simple, sans outil, par simple pression d'un élément contre l'autre, sans ordre de positionnement préférentiel.

Dans le cas de meubles en matières plastiques obtenus par injection ou compression, ce dispositif permet d'obtenir des éléments de qualité d'un faible coût.

Il va de soi que d'autres applications de l'invention sont envisageables, notamment dans les domaines de l'agencement de magasin, pour la confection de présentoirs, vitrines, jouets et autres.

REVENDICATIONS

1.- Dispositif d'assemblage d'éléments de construction, notamment d'ameublement (1, 2) présentant au moins une face de panneaux (9, 10), caractérisé par le fait qu'il comporte deux branches identiques (5, 6) solidaires respectivement de chacun des panneaux (9, 10) et perpendiculaires à ceux-ci, ces branches (5, 6) présentant des surépaisseurs polyédriques à surfaces planes complémentaires en contre-dépouille ou crochets (7, 8) complétées par des surfaces planes (3, 4) perpendiculaires chacune à l'autre panneau (9, 10) et formant avec la surface correspondante des branches (5, 6) un angle (∝) de manière à définir pour les crochets (7, 8) des arêtes (16, 18) formant le même angle (∝) avec les surfaces des branches (5, 6), les faces planes (3, 4) étant destinées à glisser l'une sur l'autre sous l'effet d'un effort d'assemblage (F) à l'encontre de la réaction élastique des branches (5, 6) jusqu'à enclenchement par retour élastique des crochets (7, 8).

2.- Dispositif selon la revendication 1, caractérisé par le fait qu'il comporte en outre sur chaque panneau (9, 10) des premiers chanfreins complémentaires (11, 12) destinés à s'appuyer l'un sur l'autre en position assemblée.

3.- Dispositif selon la revendication 1 ou la revendication 2, caractérisé par le fait qu'il comporte sur chaque élément (1, 2) à assembler des seconds chanfreins (13, 14) sur des nervures perpendiculaires aux panneaux (9, 10).

Fig. 1

Fig. 2 C

Fig. 2 B

Fig. 2 A

## Office européen des brevets

## RAPPORT DE RECHERCHE EUROPEENNE

Numéro de la demande

EP 87 42 0091

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 545 712 (ELLIS)<br>* Colonne 1, lignes 7-10; revendication 1; figures 1,2 * | 1 | F 16 B 12/26 |
| A,D | FR-A-2 304 808 (NEWAGE)<br>* Figures 2,3 * | 1 | |
| A | FR-A-2 380 801 (ROSSLER)<br>* Revendications 1,8,9; figures 3,4 * | 1 | |

| DOMAINES TECHNIQUES RECHERCHES (Int. Cl.4) |
|---|
| F 16 B<br>A 63 H |

Le présent rapport de recherche a été établi pour toutes les revendications

| Lieu de la recherche | Date d'achèvement de la recherche | Examinateur |
|---|---|---|
| LA HAYE | 08-07-1987 | SCHMITTER BERNARD |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82